# EUROPEAN PATENT APPLICATION

(11) **EP 3 257 349 A1**
(43) Date of publication of application: **20.12.2017**
(21) Application number: 16748724.8
(22) Date of filing: 05.02.2016
(51) Int. Cl.: A01D 34/00, G05D 1/03

(54) **MULTI-REGION WORK CONTROL SYSTEM AND CONTROL METHOD THEREFOR**

(30) Priority: 13.02.2015 CN 201510080551
(71) Applicant: Positec Power Tools (Suzhou) Co., Ltd, Suzhou, Jiangsu 215123 (CN)
(72) Inventor: JIAO, Shiping, Suzhou, Jiangsu 215123 (CN); SUN, Gen, Suzhou, Jiangsu 215123 (CN); DONG, Yongming, Suzhou, Jiangsu 215123 (CN)
(74) Representative: Stuttard, Garry Philip
(86) International application number: PCT/CN2016/073615
(87) International publication number: WO 2016/127923

(57) **Abstract**

Disclosed is a multi-region work control system, comprising a plurality of conducting wire circuits, a control module, and a self-moving working device. The working region includes a plurality of subunit, a conducting wire being arranged along the boundary of each subunit. The control module is configured to control an electric signal transmitted in the conducting wire circuit corresponding to the subunit in the working region. The self-moving working device is configured to cut the working region. In the system, by partitioning, the self-moving working device firstly returns back to a preset point, and then enters a corresponding region to work according to the electrical signal transmitted in the conducting wire circuit, thereby avoiding repeatedly working in a certain region from beginning to end or missing a certain region. The system is capable of selecting an appropriate working mode in a region-wise manner according to specific conditions of various regions, so that diversified demands of a user are satisfied, and the user does yard work more conveniently and is free from worry.

## Description

### BACKGROUND

### Technical Field

The present invention relates to the technical field of multi-region work of smart equipment, and in particular, to a multi-region work control system and control method.

### Related Art

Self-moving working devices, such as a robotic mower, a robotic snowplow, a robotic fertilizer distributor, are capable of automatically completing work of mowing lawn, sweeping snow, fertilization, and the like without direct control and operation manually, have advantages of low power, low noises, compact and artistic appearance, and significant reduction in manual operation, and thus are widely used. A self-moving work device has an automatic walking function, is capable of automatically returning for recharging, and performing security detection and electric volume measurement, has a climbing capability, and especially is suitable for work such as lawn mowing and maintenance, snow sweeping, and fertilization, in places such as a family courtyard and a public green.

However, at present, when the self-moving working device works in a working region, the working region is not partitioned and the self-moving working device only randomly works in a region enclosed by a boundary. By using an application scenario of a robotic mower as an example, a lawn of a user generally is divided into several regions, such as foreyard and backyard, and when there is only one boundary that defines all the regions as one range, a scenario in which the robotic mower often mows in a certain region or misses a certain region may occur. Moreover, grass growth conditions are different in different regions due to factors such as illumination, and requirements for lawn mowing frequency and mowing depth also vary. If only one mowing mode, one mowing frequency, or one mowing depth is used, the mowing efficiency may be reduced, and it is also difficult for the mowing effect to meet the requirements by the user.

### SUMMARY

On this basis, it is necessary to provide a multi-region work control system and a control method therefor with respect to the problem that the robotic mower cannot mow lawn at different regions in a user's garden.

The present invention provides a multi-region work control system for multi-region cutting control of a self-moving working device, characterized by comprising: a plurality of conducting wire circuits, wherein the conducting wire circuits divide a to-be-cut working region into a plurality of working region units; each of the conducting wire circuits corresponds to one working region unit, the conducting wire of the conducting wire circuit being disposed along the boundary of the working region unit; and the conducting wire circuits are connected to the control module; a control module, wherein the control module is connected to the conducting wire circuits and is configured to control the conducting wire circuits in the working region, such that there is only one conducting wire circuit that transmits an electric signal in one same period of time or there are at least two different conducting wire circuits that simultaneously transmit electric signals of different types in one same period of time; and a self-moving working device, wherein the self-moving working device executes work in the working region; the self-moving working device comprises a sensor and a working module; the sensor is configured to acquire a state of electric signal transmitted in the conducting wire circuits; and the working module is configured to control, according to the state of electric signal transmitted in the conducting wire circuits acquired by the sensor, the self-moving working device to execute work with respect to a working region unit corresponding to a conducting wire circuit in which an electric signal is transmitted or with respect to a working region unit corresponding to a conducting wire circuit in which an electric signal of a preset type is transmitted.

Preferably, the self-moving working device further comprises a returning module; and the returning module is configured to enable the self-moving working device to return back to a designated location before the self-moving working device starts or after the self-moving working device finishes work for the working region unit.

Preferably, a docking station or a charging station is provided at the designated location, and the control module is located at the docking station or the charging station.

Preferably, the working module comprises a preset module, a comparison module, and an execution module; the preset module is configured to preset working modes corresponding to the working region units; the comparison module is configured to compare a working region unit corresponding to an electric signal acquired by the sensor with preset information in the preset module, to obtain a working mode corresponding to the working region unit; and the execution module is configured to execute the working mode obtained by the comparison module for working.

Preferably, the self-moving working device is a robotic mower, and the working mode comprises a cutting height, and/or a cutting frequency, and/or a cutting time, and/or a cutting speed.

Preferably, the self-moving working device is provided with a location determining module; and the location determining module is configured to determine, according to an electric signal acquired by the sensor, whether the self-moving working device is located inside, outside, or on the boundary of a working region unit to be cut.

Preferably, when the control module controls at least two conducting wire circuits of the conducting wire to simultaneously transmit electric signals of different types in one same period of time, the system comprises a plurality of self-moving working devices, each of which works, according to the type of an electric signal, in a working region unit formed by a conducting wire circuit that transmits an electric signal of the corresponding type.

The present invention also provides a multi-region work control method, comprising: dividing, by conducting wire circuits, a to-be-operated working region into a plurality of working region units, wherein each conducting wire circuit corresponds to one working region unit, and the conducting wire of the conducting wire circuit is disposed along the boundary of the working region unit; controlling the conducting wire circuits in the working region, such that there is only one conducting wire circuit that transmits an electric signal in one same period of time or there are at least two different conducting wire circuits that simultaneously transmit electric signals of different types in one same period of time; and acquiring, by the sensor of the self-moving working device, a state of electric signal transmitted in the conducting wire circuits in the working region units, and cutting, by the self-moving working device, a working region unit corresponding to a conducting wire circuit in which an electric signal is transmitted or a working region unit corresponding to a conducting wire circuit in which an electric signal of a preset type is transmitted.

Preferably, the multi-region work control method further comprises presetting a designated location to which the self-moving working device returns before the self-moving working device starts or after the self-moving working device finishes work for the working region unit.

Preferably, after cutting the working region unit, the self-moving working device searches for a conducting wire by means of an intensity of a magnetic field generated by the conducting wire that transmits an electric signal or a direction of magnetic line of force acquired by the sensor, and returns back to the designated location along the conducting wire circuit in the region, or cross the conducting wire.

Preferably, the self-moving working device is located at the designated location when controlling switching of electric signal transmission between conducting wire circuits corresponding to different working region units, and switching of different electric signals transmitted in a conducting wire circuit of one same working region unit.

Preferably, the self-moving working device determines, according to a magnetic flux direction, of an electromagnetic field generated by electric signal transmitted in the conducting wire circuit, acquired by the sensor, whether the cutting device is located inside, outside, or on the boundary of a working region unit to be cut.

Preferably, the step of acquiring, by the sensor of the self-moving working device, a state of electric signal transmitted in the conducting wire circuits in the working region units, and cutting, by the self-moving working device, a working region unit corresponding to a conducting wire circuit in which an electric signal is transmitted, further comprises the following steps: presetting working modes corresponding to the working region units; comparing a working region unit corresponding to an electric signal acquired by the sensor with preset information, to obtain a working mode corresponding to the working region unit; and executing the working mode obtained by the comparison module for working.

Preferably, the control module controls time or a sequence of electric signals transmitted in each conducting wire circuit, so as to control a working time or working sequence of the cutting device in the working region unit corresponding to the conducting wire circuit.

The multi-region work control system acquires information about electric signals on conducting wires in working region units by means of a sensor on the self-moving working device, and executes work, according to a state of electric signal transmitted in conducting wire circuits, with respect to a working region unit in which a conducting wire circuit in which an electric signal is located, or with respect to a working region unit corresponding to a conducting wire circuit in which an electric signal of a predetermined type is transmitted. Continuous work in the same region all the time, or skip of work in a region, of the self-moving working device can be effectively avoided. Moreover, the self-moving working device can be selected in different working modes when the self-moving working device is in different working region units, thereby being more suitable for meeting needs of each working region unit and satisfying diversified demands of users.

### BRIEF DESCRIPTION OF THE DRAWINGS

Fig. 1 is a schematic block diagram of an embodiment of a multi-region cutting control system;
Fig. 2 is a schematic block diagram of another embodiment of the multi-region cutting control system;
Fig. 3 is a flow chart of an embodiment of a multi-region cutting control method;
Fig. 4 is a flow chart of another embodiment of the multi-region cutting control method;
Fig. 5 is a specific flow chart of one step in the multi-region cutting control method in Fig. 3 and Fig. 4;
Fig. 6 is a flow chart of another embodiment of the multi-region cutting control method;
Fig. 7 is a flow chart of another embodiment of the multi-region cutting control method;
Fig. 8 is a structural schematic diagram of an embodiment of the multi-region cutting control system;
Fig. 9-1 is a waveform diagram of an embodiment of an electric signal; and
Fig. 9-2 is a waveform diagram of another embodiment of an electric signal.

### DETAILED DESCRIPTION

To further describe the technical means used and effects obtained in the present invention, the following clearly and completely describes the technical solutions of the present invention with reference to the accompanying drawings and the exemplary embodiments of the present invention.

A self-moving working device described in the present invention comprises a machine capable of automatically moving and automatically executing work. Working types of the self-moving working device specifically are lawn mowing, snow sweeping, ground sweeping, fertilizing, and the like. That is, the self-moving working device specifically is a machine such as a robotic mower, a robotic snowplow, a robotic cleaner, and a robotic fertilizer distributor. Correspondingly, the multi-region work control system specified in the present invention includes a multi-region lawn mowing system, a multi-region cleaning system, a multi-region fertilizing system, and the like.

The specific difference in the working type of the self-moving working device does not influence multi-region control of the present invention. Therefore, only a machine in a working type of lawn mowing is used as an example in the embodiments of the present invention. The other working types can be implemented by replacing the lawn mowing working component.

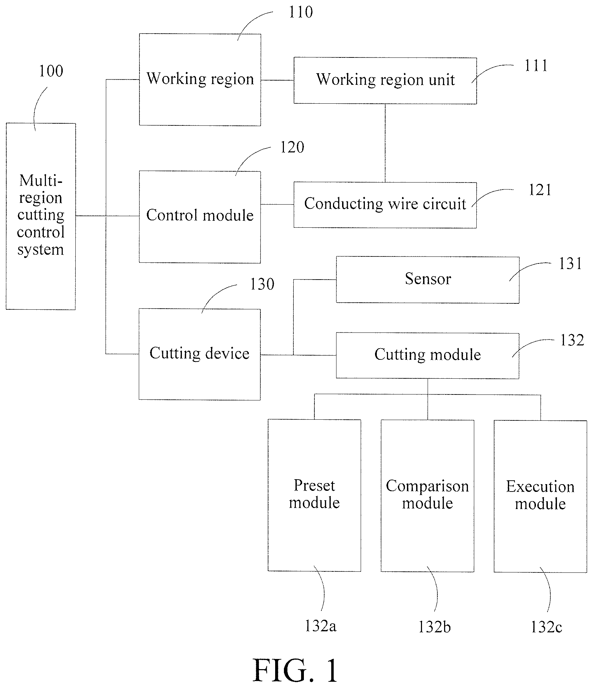

As shown in Fig. 1, a multi-region cutting control system 100 of the present invention is configured to control multi-region mowing of a lawn mower, and includes a plurality of conducting wire circuits 121 arranged on a working region 110, a control module 120, and a cutting device 130. In this embodiment, the cutting device 130 specifically is a robotic mower.

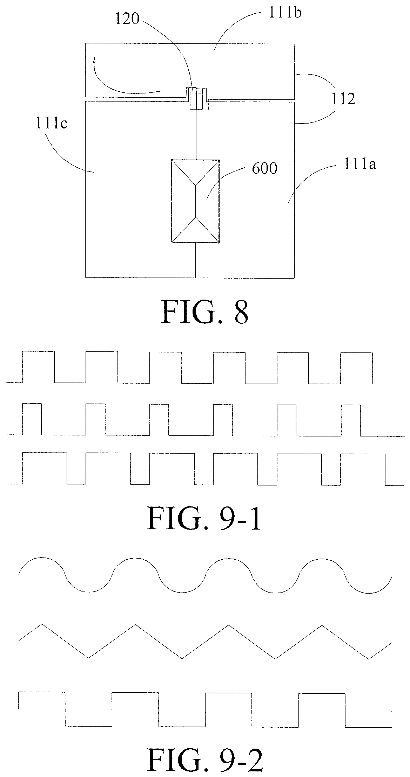

The working region 110 is a to-be-cut region, and the plurality of conducting wire circuits 121 divides the to-be-cut region into a plurality of working region units 111. Each conducting wire circuit 121 corresponds to one working region unit 111. A conducting wire 112 is disposed on the boundary of each working region unit 111. The conducting wire 112 of each working region unit 111 is connected to the control module 120 to form a conducting wire circuit 121. As shown in Fig. 8, the working region 110 is a lawn of a user courtyard and includes three working region units, respectively, 111a, 111b, and 111c. A conducting wire 112 is disposed on the boundary of each working region unit 111. The conducting wire 112 of each independent working region unit 111 is connected to the control module 120 to form a conducting wire circuit 121. It should be noted that, a person skilled in the art should be aware of that the number of working region units 111 included in the working region 110 is not limited, and may be set according to different situations of the working region 110 as long as at least two working region units 111 are provided. For example, in Fig. 8, the lawn in front of a house 600 grows fast due to good sunshine and needs to be mown frequently. However, the lawn behind the house 600 grows slowly due to insufficient sunshine and does not need to be mown frequently. The degree of demand for mowing of the lawns on two sides of the house 600 is between those of the foreyard and the backyard. Therefore, the lawn of the courtyard may be divided into three working region units 111 by the user.

The control module 120 is configured to control electric signal transmission in conducting wire circuits 121 corresponding to different working region units 111 (that is, subunits) in the working region 110. The control module 120 controls only one conducting wire circuit 121, among all the conducting wire circuits 121, to transmit an electric signal within one period of time, or controls at least two different conducting wire circuits to simultaneously transmit different electric signals within one period of time. As shown in Fig. 8, the control module 120 is preferably disposed on a charging station or a docking station of a cutting device 130. The cutting device 130 returns back to the charging station or the docking station after completing work in one working region unit 111. The control module 120 may be implemented by means of an integrated circuit, a single-chip microcomputer, or the like, and a person skilled in the art should be aware of that the specific implementation manner of the control module 120 is not limited, as long as functions of the control module 120 can be satisfied. Controlling over the conducting wire circuits 121 by the control module 120 is set according to a demand of a user. The user may select to transmit an electric signal to a conducting wire circuit 121 of a to-be-cut working region unit 111 by means of an outer button provided, or may implement same directly by means of software installed in the control module 120. In an embodiment, the control module 120 controls only one conducting wire circuit 121, among all the conducting wire circuits 121, to transmit an electric signal within one period of time. The cutting device 130 can detect an electric signal transmitted on a conducting wire circuit 121 of only one working region unit 111 within different periods of time. Therefore, the cutting device 130 can enter different working region units 111 in different periods of time, and determine a working region unit 111 in which the cutting device 130 is located according to a difference in the period of time that the cutting device 130 is in, so as to execute a cutting mode corresponding to the working region unit 111. It is known by a person skilled in the art that electric signals transmitted by different conducting wire circuits 121 may be the same or different.

As shown in Fig. 9-1 and Fig. 9-2, for electric signals of different types transmitted by the conducting wire circuits 121, specifically, at least one of the waveform, the amplitude, or the frequency of the electric signals is different.

In an embodiment, the control module 120 controls at least two different conducting wire circuits to simultaneously transmit different electric signals within one period of time. The electric signals that are transmitted on different conducting wire circuits 121 and detected by the cutting device 130 are different when the cutting device 130 is in different working region units 111. Therefore, the cutting device 130 may determine a working region unit 111 in which the cutting device 130 is located according to a difference in the electric signal, so as to execute a cutting mode corresponding to the working region unit 111. As it is known by a person skilled in the art, in the embodiment, alternatively, a plurality of cutting devices 130 works simultaneously in different working region units 111, and different cutting devices 130 execute cutting modes corresponding to the corresponding working region units 111. As it is known by a person skilled in the art, in the embodiment, alternatively, one cutting device 130 works in different working region units 111 in a time-division manner, and the control module 120 may transmit different electric signals in different conducting wire circuits in a time-division manner. The cutting device 130 is configured to mow the working region 110. The cutting device 130 is provided with a sensor 131 and a cutting module 132. The sensor 131 is configured to acquire electric signals of the conducting wire circuits 121 of the working region units 111. The cutting module 132 is configured to acquire a state of electric signal transmitted in the conducting wire circuits 121, and to control, according to the state of electric signal transmitted in the conducting wire circuits 121 acquired by the sensor 131, the cutting device 130 to mow a working region unit 111 corresponding to a conducting wire circuit 121 in which an electric signal is transmitted. As shown in Fig. 8, the lawn of the user courtyard is divided into three working region units 111. The cutting device 130 herein is a robotic mower. The sensor 131 is disposed on the lawn mower. The sensor 131 is used to acquire electric signals in the conducting wire circuits 121 in the working region units 111. Preferably, the sensor 131 has a function of sensing electromagnetic field intensity or an electric signal waveform. The control module 120 controls different conducting wire circuits 121 not to simultaneously transmit electric signals. Therefore, once the sensor 131 on the robotic mower senses a conducting wire circuit 121 in which an electric signal is transmitted, a working region unit 111 corresponding to the conducting wire circuit 121 is mown.

A user may set relevant parameters in the control module 120 according to specific situation of the working region units 111 corresponding to the different conducting wire circuits 121. If the user divides the lawn of the user's courtyard into three working region units 111, the user sets the length or period of time of an electric signal transmitted in each conducting wire circuit 121 according to the size, the degree of grass flourishing, or the degree of grass growth of each working region unit 111. In the embodiment in which the control module 120 controls only one conducting wire circuit 121, among all the conducting wire circuits 121, to transmit an electric signal within one period of time, the control module 120 controls the periods of time for which the electric signals are transmitted in different conducting wire circuits 121, so as to control the periods of time for which the cutting device 130 works in different working region units 111. The control module 120 controls the periods of time for which or the time sequence in which the electric signals are transmitted in different conducting wire circuits 121, so as to control the periods of time for which the cutting device 130 works in different working region units 111 or the sequence in which the cutting device 130 enters different working region units 111 to work. In the embodiment in which the control module 120 controls at least two conducting wire circuits 121, among all the conducting wire circuits, to transmit electric signals of different types within one period of time, the control module 120 controls the periods of transmission time, the transmission periods, or the time sequence of the electric signals of different types, so as to control the length of time for which, the duration for which, or the working sequence in which the cutting device 130 works in different working region units 111.

As shown in Fig. 1, in one embodiment, the cutting module 132 comprises a preset module 132a, a comparison module 132b, and an execution module 132c. The preset module 132a is configured to preset a cutting mode corresponding to a working region unit 111. The comparison module 132b is configured to compare a working region unit 111 corresponding to an electric signal acquired by the sensor 131 with preset information in the preset module 132a, to obtain a cutting mode corresponding to the working region unit 111. The execution module 132c is configured to perform cutting according to the cutting mode obtained by the comparison module 132b.

In the embodiment, the working region units 111 may also be numbered. The sensor 131 acquires information about an electric signal and obtains a serial number of a working region unit 111 corresponding to the electric signal. The preset module 132a presets a cutting mode corresponding to each serial number. The comparison module 132b numbers a to-be-cut working region unit 111 acquired by the sensor 131, maps same to the preset module 132a, and obtains a cutting mode of the cutting device 130. The execution module 132c of the cutting device 130 then performs cutting in the cutting mode.

In the embodiment, electric signals transmitted in the conducting wire circuits 121 corresponding to the respective working region units 111 are different and are transmitted in a time-division manner. Different electric signals correspond to different conducting wire circuits 121, and also correspond to different cutting modes needed by the working region units 111. Specifically, the cutting mode includes at least one of parameters of a cutting frequency (that is, the number of cutting times per unit time period), a cutting height, a cutting speed, and a cutting time (that is, the length of time that each cutting lasts). For example, the lawn in a working region unit 111 having a better soil property and sunshine needs a greater number of cutting times within a predetermined period of time, the cutting depth thereof is also comparatively deep, the cutting speed is also comparatively slow within a fixed period of time, and the cutting time is comparatively long. If the control module 120 controls, within one period of time, at least two different conducting wire circuits to simultaneously transmit different electric signals, there may also be a plurality of robotic mowers that works simultaneously. Different electric signals being corresponding to different working region units may also indicate being corresponding to different cutting modes of the working region unit.

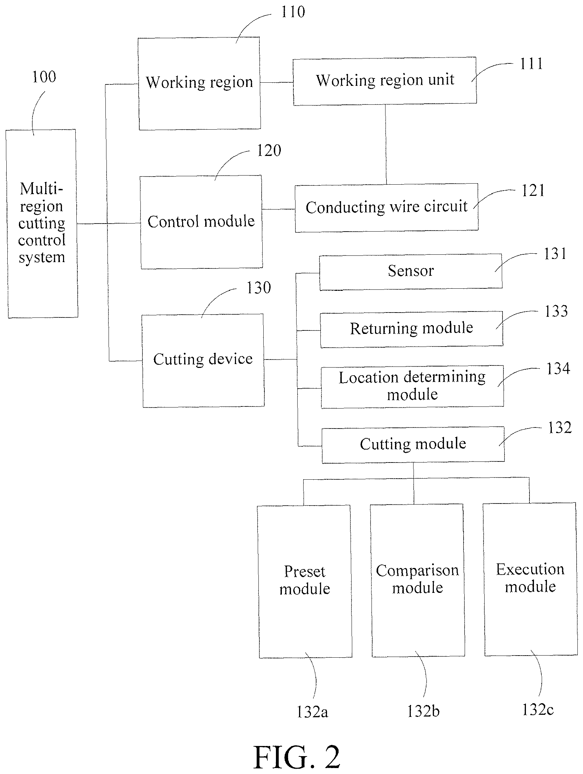

As shown in Fig. 2, in one of the embodiments, sensors 131 are provided at left and right sides of the cutting device 130, and a location determining module 134 is further provided on the cutting device 130. The location determining module 134 is configured to determine, according to a state of an electromagnetic field generated by electric signals that are transmitted in the conducting wire circuits 121 and acquired by the sensors 131 at the left and right sides, whether the cutting device 130 is located inside, outside, or on the boundary of the working region unit 111. Specifically, directions of magnetic fluxes in the sensors 131 are used as a basis. For example, if the magnetic fluxes acquired by the sensors 131 at left and right sides of the cutting device both face downwards, the cutting device is located inside the working region unit 111; if the magnetic fluxes both face upwards, the cutting device is located outside the working region unit 111; and if one magnetic flux faces upwards and one faces downwards, the cutting device is located on the boundary line of the working region unit 111. The specific direction is subject to the direction of a current that passes through the conducting wire, and satisfies the law of electromagnetic induction. This embodiment is suitable for a situation in which an abnormity of the location of the cutting device 130 appears, for example, the cutting device 130 is moved manually or due to other factors.

As shown in Fig. 2, in one embodiment, a returning module 133 is further provided on the cutting device 130. The returning module 133 is configured to enable the cutting device 130 to return before starting cutting or after finishing cutting of a working region unit 111. In the embodiment, before the cutting device 130 starts cutting one of the working region units 111 or after the cutting device 130 finishes cutting one of the working region units 111, the cutting device 130 should be located in a designated location. If the cutting device 130 is not located in the designated location, the cutting device 130 needs to search for a conducting wire 112 according to intensity of a magnetic field generated by an electric signal that is transmitted in the conducting wire circuit 121 and acquired by the sensor 131, and then returns back to the designated location along the conducting wire 112. The designated location should be configured at a location through which all the conducting wire circuits 121 pass, preferably, a charging station in which the control module 120 is located. In addition, the control module 120 controls switch of electric signals transmitted in the conducting wire circuits corresponding to different working region units 111. That is, during switch of different electric signals transmitted in the conducting wire circuits in the same working region unit 111, it needs to be ensured that the cutting device 130 is located at the designated location.

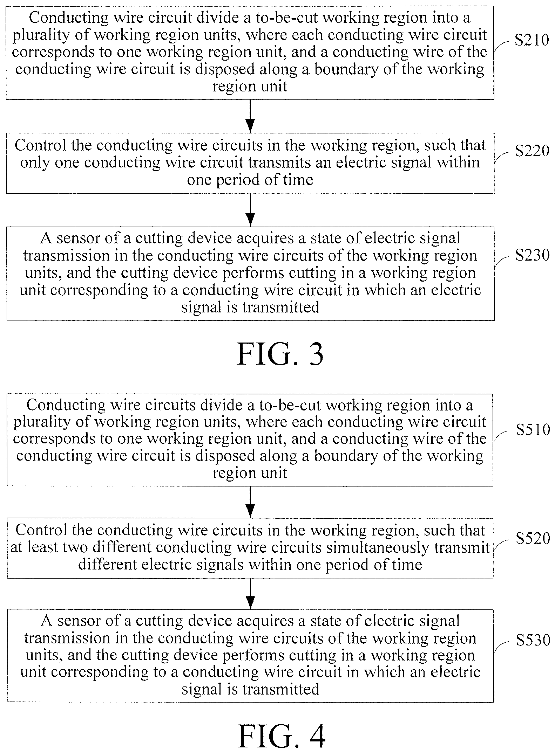

As shown in Fig. 3, as an embodiment, a multi-region cutting control method comprises the following steps:
S210: Conducting wire circuits 121 divide a to-be-cut working region 110 into a plurality of working region units 111, where each conducting wire circuit 121 corresponds to one working region unit 111, and the conducting wire 112 of the conducting wire circuit 121 is disposed along the boundary of the working region unit 111.

As shown in Fig. 8, in the step, the working region 110 is a lawn of a user courtyard and includes three working region units, respectively, 111a, 111b, and 111c. A conducting wire 112 is disposed on the boundary of each working region unit 111. The conducting wire 112 of each independent working region unit 111 forms a conducting wire circuit 121. Division of the working region into working region units is performed according to an actual situation and needs. For example, in Fig. 8, the lawn in front of a house 600 grows fast due to good sunshine and needs to be mown frequently. However, the lawn behind the house 600 grows slowly due to insufficient sunshine and does not need to be mown frequently. The degree of demand for mowing of the lawns on two sides of the house 600 is between those of the foreyard and the backyard. Therefore, a user may divide the lawn of the courtyard into three working region units 111.

As shown in Fig. 8, the cutting device 130 in the multi-region cutting control system 100 stops at a charging station when is not in operation. When starting operation, the cutting device 130 enters different working region units to mow according to a state of electric signals in the respective conducting wire circuits 121 of the working region units 111a, 111b, 111c on the boundaries thereof. In a fast case, the control module 120 controls only one conducting wire circuit 121, among the conducting wire circuits 121 corresponding to the three working region units, to transmit an electric signal. The cutting device 130 enters a working region unit having an electric signal to mow, and selects a suitable cutting mode according to a period of time that the cutting device 130 is in, to perform cutting in the working region unit. After finishing cutting of the working region unit, the cutting device 130 returns back to the charging station.

In a second case, the control module 120 controls at least two conducting wire circuits 121, among the conducting wire circuits 121 corresponding to the three working region units, to transmit different electric signals. The cutting device 130 enters a corresponding working region unit according to a type of an electric signal, and selects a suitable cutting mode according to the type of the electric signal, to perform cutting in the working region unit. After finishing cutting of the working region unit, the cutting device 130 returns back to the charging station.

S220: Control the conducting wire circuits 121 in the working region 110, such that only one conducting wire circuit transmits an electric signal within one period of time.

As shown in Fig. 8, in the step, the control module 120 that controls the conducting wire circuits 121 of the working region units 111 is preferably disposed on a charging station of the cutting device 130. The control module 120 can be implemented by means of an integrated circuit or a single-chip microcomputer. A person skilled in the art should know that the specific implementation manner of the control module 120 is not limited, as long as functions of the control module 120 can be satisfied. Controlling over the conducting wire circuits 121 by the control module 120 is set according to a demand of a user. The user may select to transmit an electric signal to a conducting wire circuit 121 of a to-be-cut working region unit 111 by means of an outer button provided, or may implement same directly by means of software installed in the control module 120. In the embodiment, electric signals transmitted by different conducting wire circuits 121 may be different or may also be identical. As shown in Fig. 9-1 and Fig. 9-2, for the difference in the electric signals transmitted by the conducting wire circuits 121, specifically, at least one of the waveform, the amplitude, or the frequency of the electric signals is different.
S230: A sensor 131 of a cutting device 130 acquires a state of electric signal transmitted in the conducting wire circuits 121 of the working region units 111, and the cutting device 130 performs cutting in a working region unit 111 corresponding to a conducting wire circuit 121 in which an electric signal is transmitted.

As shown in Fig. 8, in the step, the lawn of the user courtyard is divided into three working region units 111. The cutting device 130 herein is a robotic mower. The sensor 131 is disposed on the lawn mower. The sensor 131 is used to acquire electric signals in the conducting wire circuits 121 in the working region units 111. Preferably, the sensor 131 has a function of sensing electromagnetic field intensity or an electric signal waveform. The control module 120 controls different conducting wire circuits 121 not to simultaneously transmit electric signals. Therefore, once the sensor 131 on the robotic mower senses a conducting wire circuit 121 in which an electric signal is transmitted, a working region unit 111 corresponding to the conducting wire circuit 121 is mown.

The control module 120 controls transmission of an electric signal to only one conducting wire circuit 121 within one period of time. Therefore, the cutting device 130 can determine a working region unit 111 in which the cutting device 130 is located according to a difference in the period of time that the cutting device 130 is in, so as to execute a cutting mode corresponding to the working region unit 111.

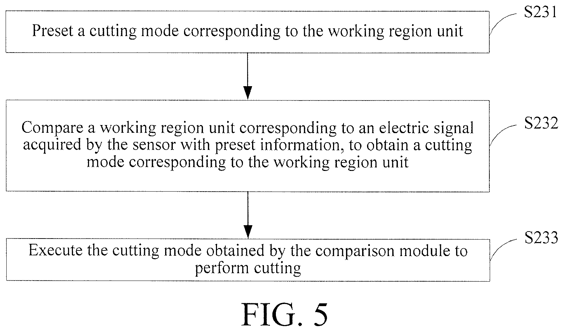

As shown in Fig. 5, in the embodiment, when different conducting wire circuits 121 transmit different electric signals, step S230 further comprises:
S231: Preset cutting modes corresponding to the working region units 111.
S232: Compare a working region unit 111 corresponding to an electric signal acquired by the sensor 131 with preset information, to obtain a cutting mode corresponding to the working region unit 111.
S233: Execute the cutting mode obtained by the comparison module 132b to perform cutting.

In the embodiment, the working region units 111 may also be numbered. The sensor 131 acquires information about an electric signal and obtains a serial number of a working region unit 111 corresponding to the electric signal. The preset module 132a presets a cutting mode corresponding to each serial number. The comparison module 132b compares the serial number of a to-be-cut working region unit 111 acquired by the sensor 131, with the information of the preset module 132a, and obtains a cutting mode of the cutting device 130. The execution module 132c of the cutting device 130 then performs cutting in the cutting mode.

In the embodiment, electric signals transmitted in the conducting wire circuits 121 corresponding to the respective working region units 111 are different and are transmitted in a time-division manner. Different electric signals correspond to different conducting wire circuits 121, and also correspond to different cutting modes needed by the working region units 111. Specifically, the cutting mode includes at least one of parameters of a cutting frequency, a cutting depth, a cutting speed, and a cutting time. For example, the lawn in a working region unit 111 having a better soil property and sunshine needs a greater number of cutting times within a predetermined period of time, the cutting depth thereof is also comparatively deep, the cutting speed is also comparatively slow within a fixed period of time, and the cutting time is comparatively long.

As shown in Fig. 4, as an embodiment, a multi-region cutting control method comprises the following steps:
S510: Conducting wire circuits 121 divide a to-be-cut working region 110 into a plurality of working region units 111, where each conducting wire circuit 121 corresponds to one working region unit 111, and a conducting wire 112 of the conducting wire circuit 121 is disposed along the boundary of the working region unit 111.

As shown in Fig. 8, in the step, the working region 110 is a lawn of a user courtyard and includes three working region units, respectively, 111a, 111b, and 111c. A conducting wire 112 is disposed on the boundary of each working region unit 111. The conducting wire 112 of each independent working region unit 111 forms a conducting wire circuit 121. Division of the working region into working region units is performed according to an actual situation and needs. For example, in Fig. 8, the lawn in front of a house 600 grows fast due to good sunshine and needs to be mown frequently. However, the lawn behind the house 600 grows slowly due to insufficient sunshine and does not need to be mown frequently. The degree of demand for mowing of the lawns on two sides of the house 600 is between those of the foreyard and the backyard. Therefore, a user needs to divide the lawn of the courtyard into three working region units 111.
S520: Control the conducting wire circuits 121 in the working region 110, such that at least two different conducting wire circuits simultaneously transmit different electric signals within one period of time.

As shown in Fig. 8, in the step, the control module 120 that controls the conducting wire circuits 121 of the working region units 111 is preferably disposed on a charging station of the cutting device 130. The control module 120 can be implemented by means of an integrated circuit or a single-chip microcomputer. A person skilled in the art should know that the specific implementation manner of the control module 120 is not limited, as long as functions of the control module 120 can be satisfied. Controlling over the conducting wire circuits 121 by the control module 120 is set according to a demand of a user. The user may select to transmit an electric signal to a conducting wire circuit 121 of a to-be-cut working region unit 111 by means of an outer button provided, or may implement same directly by means of software installed in the control module 120.

In the embodiment, two or more conducting wire circuits 121 simultaneously transmit different electric signals. As shown in Fig. 9-1 and Fig. 9-2, for the difference in the electric signals transmitted by the conducting wire circuits 121, specifically, at least one of the waveform, the amplitude, or the frequency of the electric signals is different. In this case, a plurality of cutting devices simultaneously performs cutting for corresponding working region units in the working region according to the acquired different electric signals.
S530: A sensor 131 of a cutting device 130 acquires a state of electric signal transmitted in the conducting wire circuits 121 of the working region units 111, and the cutting device 130 performs cutting in a working region unit 111 corresponding to a conducting wire circuit 121 in which an electric signal is transmitted.

As shown in Fig. 8, in the step, the lawn of the user courtyard is divided into three working region units 111. The cutting device 130 herein is a robotic mower. The sensor 131 is disposed on the lawn mower. The sensor 131 is used to acquire electric signals in the conducting wire circuits 121 in the working region units 111. Preferably, the sensor 131 has a function of sensing electromagnetic field intensity or an electric signal waveform. The control module 120 controls at least two different conducting wire circuits to simultaneously transmit different electric signals within one period of time. In this case, there may be a plurality of robotic mowers that simultaneously work in different working region units 111, or there may be one robotic mower that works in different working region units 111 in a time-division manner.

As shown in Fig. 5, when at least two conducting wire circuits 121 simultaneously transmit different electric signals, and the different electric signals represent different cutting modes, step S530 further comprises:
S231: Preset cutting modes corresponding to the working region units 111.
S232: Compare a working region unit 111 corresponding to an electric signal acquired by the sensor 131 with preset information, to obtain a cutting mode corresponding to the working region unit 111.
S233: Execute the cutting mode obtained by the comparison module 132b to perform cutting.

In the embodiment, the working region units 111 may also be numbered. The sensor 131 acquires information about an electric signal and obtains a serial number of a working region unit 111 corresponding to the electric signal. The preset module 132a presets a cutting mode corresponding to each serial number. The comparison module 132b compares the serial number of a to-be-cut working region unit 111 acquired by the sensor 131, with the information of the preset module 132a, and obtains a cutting mode of the cutting device 130. The execution module 132c of the cutting device 130 then performs cutting in the cutting mode.

In the embodiment, electric signals transmitted in the conducting wire circuits 121 corresponding to the respective working region units 111 are different and are transmitted simultaneously. Specific cutting modes corresponding to different electric signals are preset in the cutting device, and different electric signals correspond to different conducting wire circuits 121. That is, different working region unit 111 correspond to needed cutting modes. In this way, a plurality of cutting devices may simultaneously execute corresponding cutting modes to perform cutting with respect to different working region units in the working region. Specifically, the cutting mode includes at least one of parameters of a cutting frequency, a cutting height, a cutting speed, and a cutting time. For example, the lawn in a working region unit 111 having a better soil property and sunshine needs a greater number of cutting times within a predetermined period of time, the cutting depth thereof is also comparatively deep, the cutting speed is also comparatively slow within a fixed period of time, and the cutting time is comparatively long.

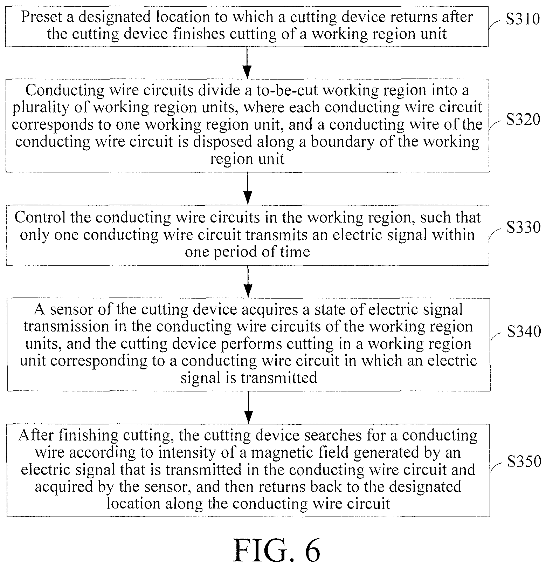

As shown in Fig. 6, as an embodiment, a multi-region cutting control method comprises the following steps:
S310: Preset a designated location to which a cutting device 130 returns after the cutting device 130 finishes cutting of a working region unit 111.

In the step, the designated location should be configured at a location through which all the conducting wire circuits 121 pass, preferably, a charging station in which the control module 120 is located. In this way, a cutting device 130 returns back to the designated location after finishing cutting of one working region unit 111, and the cutting device 130 uniformly starts from the designated location when being controlled to execute a next cutting task, such that cutting by the cutting device 130 is more ordered. The cutting device 130 may automatically return back to the charging station for charging after finishing cutting, so as to satisfy the cutting power needs.
S320: Conducting wire circuits 121 divide a to-be-cut working region 110 into a plurality of working region units 111, where each conducting wire circuit 121 corresponds to one working region unit 111, and a conducting wire 112 of the conducting wire circuit 121 is disposed along the boundary of the working region unit 111.

As shown in Fig. 8, in the step, the working region 110 is a lawn of a user courtyard and includes three working region units, respectively, 111a, 111b, and 111c. A conducting wire 112 is disposed on the boundary of each working region unit 111. The conducting wire 112 of each independent working region unit 111 forms a conducting wire circuit 121. It should be noted that, a person skilled in the art should be aware of that the number of working region units 111 included in the working region 110 is not limited, and may be set according to different situations of the working region 110 as long as at least two working region units 111 are provided. For example, in Fig. 8, the lawn in front of a house 600 grows fast due to good sunshine and needs to be mown frequently. However, the lawn behind the house 600 grows slowly due to insufficient sunshine and does not need to be mown frequently. The degree of demand for mowing of the lawns on two sides of the house 600 is between those of the foreyard and the backyard. Therefore, a user needs to divide the lawn of the courtyard into three working region units 111.
S330: Control the conducting wire circuits 121 in the working region 110, such that only one conducting wire circuit transmits an electric signal within one period of time.

As shown in Fig. 8, in the step, the control module 120 that controls the conducting wire circuits 121 of the working region units 111 is preferably disposed on a charging station of the cutting device 130. The control module 120 can be implemented by means of an integrated circuit or a single-chip microcomputer. A person skilled in the art should know that the specific implementation manner of the control module 120 is not limited, as long as functions of the control module 120 can be satisfied. Controlling over the conducting wire circuits 121 by the control module 120 is set according to a demand of a user. The user may select to transmit an electric signal to a conducting wire circuit 121 of a to-be-cut working region unit 111 by means of an outer button provided, or may implement same directly by means of software installed in the control module 120.

In the embodiment, electric signals transmitted by different conducting wire circuits 121 may be different or may also be identical. As shown in Fig. 9-1 and Fig. 9-2, for the difference in the electric signals transmitted by the conducting wire circuits 121, specifically, at least one of the waveform, the amplitude, or the frequency of the electric signals is different.
S340: A sensor 131 of the cutting device 130 acquires a state of electric signal transmitted in the conducting wire circuits 121 of the working region units 111, and the cutting device 130 performs cutting in a working region unit 111 corresponding to a conducting wire circuit 121 in which an electric signal is transmitted.

As shown in Fig. 8, in the step, the lawn of the user courtyard is divided into three working region units 111. The cutting device 130 herein is a robotic mower. The sensor 131 is disposed on the lawn mower. The sensor 131 is used to acquire electric signals in the conducting wire circuits 121 in the working region units 111. Preferably, the sensor 131 has a function of sensing electromagnetic field intensity or an electric signal waveform. The control module 120 controls different conducting wire circuits 121 not to simultaneously transmit electric signals. Therefore, once the sensor 131 on the robotic mower senses a conducting wire circuit 121 in which an electric signal is transmitted, a working region unit 111 corresponding to the conducting wire circuit 121 is mown.
S350: After finishing cutting, the cutting device 130 searches for a conducting wire 112 according to intensity of a magnetic field generated by an electric signal that is transmitted in the conducting wire circuit 121 and acquired by the sensor 131, and then returns back to the designated location along the conducting wire circuit 121.

In the step, after the cutting device 130 finishes cutting, the cutting device 130 searches for a conducting wire 112 according to intensity of a magnetic field generated by an electric signal that is transmitted in the conducting wire circuit 121 and acquired by the sensor 131, and specifically, finds the conducting wire 112 by means of acquiring the intensity of the magnetic field or by means of acquiring a direction of the magnetic field and returns back to the designated location along the conducting wire 112. Preferably, the designated location is disposed on the charging station, and the cutting device 130 can be charged directly after returning back to the designated location, to get prepared for a next cutting task.

In addition, when controlling switch of electric signal transmitted in the conducting wire circuits corresponding to different working region units 111, the cutting device 130 needs to execute corresponding cutting according to a state of a signal in a specific conducting wire circuit. At this time, it should be first ensured that the cutting device 130 is located at the designated location, so as to facilitate better control of a cutting order. Meanwhile, when controlling switch of transmission for different electric signals in the conducting wire circuits in the same working region unit 111, it should also be first ensured that the cutting device 130 is located at the designated location.

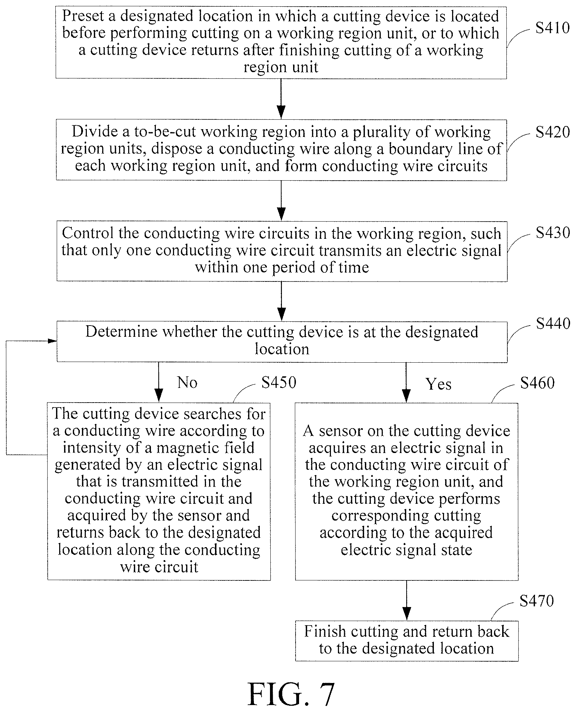

As shown in Fig. 7, as an embodiment, a multi-region cutting control method comprises the following steps:
S410: Preset a designated location in which the cutting device 130 is located before performing cutting on the working region unit 111, or to which the cutting device 130 returns after finishing cutting of the working region unit 111.

In the step, the designated location should be configured at a location through which all the conducting wire circuit 121 pass, preferably, a charging station of the cutting device 130. In this way, the cutting device 130 starts from one same location before starting cutting, to begin cutting, such that cutting of the working region unit 111 finished by the cutting device 130 is more ordered. The cutting device 130 may automatically return back to the charging station for charging after finishing cutting, so as to satisfy the cutting power needs.
S420: Divide a to-be-cut working region 110 into a plurality of working region units 111, dispose a conducting wire 112 along the boundary line of each working region unit 111, and form conducting wire circuits 121.

As shown in Fig. 8, in the step, the working region 110 is a lawn of a user courtyard and includes three working region units, respectively, 111a, 111b, and 111c. A conducting wire 112 is disposed on the boundary of each working region unit 111. The conducting wire 112 of each independent working region unit 111 forms a conducting wire circuit 121. It should be noted that, a person skilled in the art should be aware of that the number of working region units 111 included in the working region 110 is not limited, and may be set according to different situations of the working region 110 as long as at least two working region units 111 are provided. For example, in Fig. 8, the lawn in front of a house 600 grows fast due to good sunshine and needs to be mown frequently. However, the lawn behind the house 600 grows slowly due to insufficient sunshine and does not need to be mown frequently. The degree of demand for mowing of the lawns on two sides of the house 600 is between those of the foreyard and the backyard. Therefore, a user needs to divide the lawn of the courtyard into three working region units 111.
S430: Control the conducting wire circuits 121 in the working region 110, such that only one conducting wire circuit transmits an electric signal within one period of time.

As shown in Fig. 8, in the step, the control module 120 that controls the conducting wire circuits 121 of the working region units 111 is preferably disposed on a charging station of the cutting device 130. The control module 120 can be implemented by means of an integrated circuit or a single-chip microcomputer. A person skilled in the art should know that the specific implementation manner of the control module 120 is not limited, as long as functions of the control module 120 can be satisfied. Controlling over the conducting wire circuits 121 by the control module 120 is set according to a demand of a user. The user may select to transmit an electric signal to a conducting wire circuit 121 of a to-be-cut working region unit 111 by means of an outer button provided, or may implement same directly by means of software installed in the control module 120.

In the embodiment, electric signals transmitted by different conducting wire circuits 121 may be different or may also be identical. As shown in Fig. 9-1 and Fig. 9-2, for the difference in the electric signals transmitted by the conducting wire circuits 121, specifically, at least one of the waveform, the amplitude, or the frequency of the electric signals is different.
S440: Determine whether the cutting device 130 is at the designated location.

In the step, determining may be performed by the control module 120 when the cutting device 130 starts to perform cutting in one of the working region units 111. The determining aims at guarantee ordering of cutting by the cutting device 130, to facilitate control of cutting of the working region units 111.
S450: If the cutting device 130 is not at the designated location, the cutting device 130 searches for a conducting wire according to intensity of a magnetic field generated by an electric signal that is transmitted in the conducting wire circuit 121 and acquired by the sensor 131 and returns back to the designated location along the conducting wire 112; and step S440 is again performed.

In the step, a specific location of the cutting device relative to the to-be-cut working region unit 111 is determined according to a state of an electromagnetic field generated by electric signals that are transmitted in the conducting wire circuits 121 and acquired by the sensors 131 at the left and right sides of the cutting device 130. Specifically, directions of magnetic fluxes in the sensors 131 are used as a basis. For example, if the magnetic fluxes acquired by the sensors 131 at left and right sides of the cutting device 130 both face downwards, the cutting device is located inside the working region unit 111; if the magnetic fluxes both face upwards, the cutting device is located outside the working region unit 111; and if one magnetic flux faces upwards and one faces downwards, the cutting device is located on the boundary line of the working region unit 111. The specific direction is subject to the direction of a current that passes through the conducting wire, and satisfies the law of electromagnetic induction. This embodiment is suitable for a situation in which an abnormity of the location of the cutting device 130 appears, for example, the cutting device 130 is moved manually or due to other factors. The cutting device 130 searches for a conducting wire of the conducting wire circuit according to a location determined result, and returns back to the designated location along the conducting wire; and step S440 is again performed.
S460: If the cutting device 130 is at the designated location, a sensor 131 on the cutting device 130 acquires an electric signal in the conducting wire circuit 121 of the working region unit 111, and the cutting device 130 performs corresponding cutting according to the acquired electric signal state.

In the step, as shown in Fig. 8, the lawn of the user courtyard is divided into three working region units 111. The cutting device 130 herein is a robotic mower. The sensor 131 is disposed on the lawn mower. The sensor 131 acquires electric signals in the conducting wire circuits 121 in the working region units 111. If electric signals transmitted in the conducting wire circuits on the three working region units 111a, 111b, and 111c are identical, once the sensor 131 on the cutting device 130 senses a conducting wire circuit 121 in which an electric signal is transmitted, a working region unit 111 corresponding to the conducting wire circuit 121 is cut. If electric signals transmitted in the conducting wire circuits on the three working region units 111a, 111b, and 111c are different, as shown in Fig. 9-1 and Fig. 9-2, for the difference in the electric signals transmitted in the conducting wire circuits 121, specifically, at least one of the waveform, the amplitude, or the frequency of the electric signals is different. The sensor 131 on the cutting device 130 acquires information about an electric signal transmitted in the conducting wire circuit. A cutting mode corresponding to the working region unit is obtained by comparing the acquired information with preset cutting modes that correspond to different electric signals. The cutting device 130 executes the corresponding cutting mode to mow the lawn. Specifically, the sensor 131 has a function of sensing an electromagnetic field generated by an electric signal. According to the difference in information such as electromagnetic field intensity or a magnetic flux direction sensed by the sensor 131, the robotic mower executes a corresponding mowing mode to mow the lawn.
S470: Finish cutting and return back to the designated location.

In the step, after the cutting device 130 finishes cutting, a specific location of the cutting device relative to the to-be-cut working region unit 111 is determined according to a state of an electromagnetic field generated by electric signals that are transmitted in the conducting wire circuits 121 and acquired by the sensors 131 at the left and right sides of the cutting device 130. Specifically, directions of magnetic fluxes in the sensors 131 are used as a basis. For example, if the magnetic fluxes acquired by the sensors 131 at left and right sides of the cutting device 130 both face downwards, the cutting device is located inside the working region unit 111; if the magnetic fluxes both face upwards, the cutting device is located outside the working region unit 111; and if one magnetic flux faces upwards and one faces downwards, the cutting device is located on the boundary line of the working region unit 111. The specific direction is subject to the direction of a current that passes through the conducting wire, and satisfies the law of electromagnetic induction. This embodiment is suitable for a situation in which an abnormity of the location of the cutting device 130 appears, for example, the cutting device 130 is moved manually or due to other factors. The cutting device 130 searches for a conducting wire of the conducting wire circuit according to a location determined result, and returns back to the designated location along the conducting wire.

In addition, when controlling switch of the electric signal transmitted in the conducting wire circuits corresponding to different working region units 111, the cutting device 130 needs to execute corresponding cutting according to a signal state of a specific conducting wire circuit. At this time, it should be first ensured that the cutting device 130 is located at the designated location, so as to facilitate better control of a cutting order. Meanwhile, when controlling switch of different electric signals transmitted in the conducting wire circuits in the same working region unit 111, it should also be first ensured that the cutting device 130 is located at the designated location.

The multi-region cutting control system 100 acquires information about an electric signal in a conducting wire 112 on a to-be-cut working region unit 111 by means of the sensor 131 on the cutting device 130, and correspondingly executes different cutting modes according to information about different electric signals. Therefore, grass cutting in regions and in modes according to a specific state of grass growth of the lawn can be implemented, so that diversified demands of a user are satisfied, and the user does yard work more conveniently and is free from worry. By means of the multi-region cutting control method of the present invention, a to-be-cut lawn can be mown in regions and in modes, so that diversified demands of a user are satisfied, and the user does yard work more conveniently and is free from worry.

The foregoing embodiments only describe several implementation manners of the present invention, and their description is specific and detailed, but cannot therefore be understood as a limitation to the patent scope of the present invention. It should be noted that a person of ordinary skill in the art may further make variations and improvements without departing from the conception of the present invention, and these all fall within the protection scope of the present invention. Therefore, the patent protection scope of the present invention should be subject to the appended claims.

## Claims

1. A multi-region work control system for multi-region cutting control of a self-moving working device, **characterized by** comprising:
a plurality of conducting wire circuits, wherein the conducting wire circuits divide a to-be-cut working region into a plurality of working region units; each of the conducting wire circuits corresponds to one working region unit, the conducting wire of the conducting wire circuit being disposed along the boundary of the working region unit; and the conducting wire circuits are connected to the control module;
a control module, wherein the control module is connected to the conducting wire circuits and is configured to control the conducting wire circuits in the working region, such that there is only one conducting wire circuit that transmits an electric signal in one same period of time or there are at least two different conducting wire circuits that simultaneously transmit electric signals of different types in one same period of time; and
a self-moving working device, wherein the self-moving working device executes work in the working region; the self-moving working device comprises a sensor and a working module; the sensor is configured to acquire a state of electric signal transmitted in the conducting wire circuits; and the working module is configured to control, according to the state of electric signal transmitted in the conducting wire circuits acquired by the sensor, the self-moving working device to execute work with respect to a working region unit corresponding to a conducting wire circuit in which an electric signal is transmitted or with respect to a working region unit corresponding to a conducting wire circuit in which an electric signal of a preset type is transmitted.

2. The multi-region work control system according to claim 1, **characterized in that**, the self-moving working device further comprises a returning module; and
the returning module is configured to enable the self-moving working device to return back to a designated location before the self-moving working device starts or after the self-moving working device finishes work for the working region unit.

3. The multi-region work control system according to claim 2, **characterized in that**, a docking station or a charging station is provided at the designated location, and the control module is located at the docking station or the charging station.

4. The multi-region work control system according to claim 1, **characterized in that**, the working module comprises a preset module, a comparison module, and an execution module;
the preset module is configured to preset working modes corresponding to the working region units;
the comparison module is configured to compare a working region unit corresponding to an electric signal acquired by the sensor with preset information in the preset module, to obtain a working mode corresponding to the working region unit; and
the execution module is configured to execute the working mode obtained by the comparison module for working.

5. The multi-region work control system according to claim 4, **characterized in that**, the self-moving working device is a robotic mower, and the working mode comprises a cutting height, and/or a cutting frequency, and/or a cutting time, and/or a cutting speed.

6. The multi-region work control system according to claim 1, **characterized in that**, the self-moving working device is provided with a location determining module; and
the location determining module is configured to determine, according to an electric signal acquired by the sensor, whether the self-moving working device is located inside, outside, or on the boundary of a working region unit to be cut.

7. The multi-region work control system according to claim 1, **characterized in that**, when the control module controls at least two conducting wire circuits of the conducting wire to simultaneously transmit electric signals of different types in one same period of time, the system comprises a plurality of self-moving working devices, each of which works, according to a type of an electric signal, in a working region unit formed by a conducting wire circuit that transmits an electric signal of the corresponding type.

8. A multi-region work control method, **characterized by** comprising the following steps:
dividing, by conducting wire circuits, a to-be-operated working region into a plurality of working region units, wherein each conducting wire circuit corresponds to one working region unit, and the conducting wire of the conducting wire circuit is disposed along the boundary of the working region unit;
controlling the conducting wire circuits in the working region, such that there is only one conducting wire circuit that transmits an electric signal in one same period of time or there are at least two different conducting wire circuits that simultaneously transmit electric signals of different types in one same period of time; and
acquiring, by the sensor of the self-moving working device, a state of electric signal transmitted in the conducting wire circuits in the working region units, and cutting, by the self-moving working device, a working region unit corresponding to a conducting wire circuit in which an electric signal is transmitted or a working region unit corresponding to a conducting wire circuit in which an electric signal of a preset type is transmitted.

9. The multi-region work control method according to claim 8, **characterized by** further comprising presetting a designated location to which the self-moving working device returns before the self-moving working device starts or after the self-moving working device finishes work for the working region unit.

10. The multi-region work control method according to claim 9, **characterized in that**, after cutting the working region unit, the self-moving working device searches for a conducting wire by means of an intensity of a magnetic field generated by the conducting wire that transmits an electric signal or a direction of magnetic line of force acquired by the sensor, and returns back to the designated location along the conducting wire circuit in the region, or cross the conducting wire.

11. The multi-region work control method according to claim 9, **characterized in that**, the self-moving working device is located at the designated location when controlling switching of electric signal transmission between conducting wire circuits corresponding to different working region units, and switching of different electric signals transmitted in a conducting wire circuit of one same working region unit.

12. The multi-region work control method according to claim 8, **characterized in that**, the self-moving working device determines, according to a magnetic flux direction, of an electromagnetic field generated by electric signal transmitted in the conducting wire circuit, acquired by the sensor, whether the cutting device is located inside, outside, or on the boundary of a working region unit to be cut.

13. The multi-region work control method according to claim 8, **characterized in that**, the step of acquiring, by the sensor of the self-moving working device, a state of electric signal transmitted in the conducting wire circuits in the working region units, and cutting, by the self-moving working device, a working region unit corresponding to a conducting wire circuit in which an electric signal is transmitted further comprises the following steps:
presetting working modes corresponding to the working region units;
comparing a working region unit corresponding to an electric signal acquired by the sensor with preset information, to obtain a working mode corresponding to the working region unit; and
executing the working mode obtained by the comparison module for working.

14. The multi-region work control method according to claim 8, **characterized in that**, the control module controls time or a sequence of electric signals transmitted in each conducting wire circuit, so as to control a working time or working sequence of the cutting device in the working region unit corresponding to the conducting wire circuit.
